# FASCICULE DE BREVET EUROPEEN

(11) **EP 4 076 980 B1**
(45) Date de publication et mention de la délivrance du brevet: **07.02.2024**
(21) Numéro de dépôt: 20842281.6
(22) Date de dépôt: 10.12.2020
(51) Int. Cl.: B60C 1/00, C08L 9/06

(54) **COMPOSITION DE CAOUTCHOUC COMPRENANT UNE RESINE DE POLYPHENYLENE ETHER**
KAUTSCHUKZUSAMMENSETZUNG MIT EINEM POLYPHENYLENEÄTHERHARZ
RUBBER COMPOSITION COMPRISING A POLYPHENYLENE ETHER RESIN

(30) Priorité: 18.12.2019 FR 1914741
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: PAGANO, Salvatore, 63040 CLERMONT-FERRAND Cedex 9 (FR); ROUDET, Cédric, 63040 CLERMONT-FERRAND Cedex 9 (FR); WAECKERLE, Nicolas, 63040 CLERMONT-FERRAND Cedex 9 (FR)
(74) Mandataire: M.F.P. Michelin
(86) Numéro de dépôt international: PCT/FR2020/052371
(87) Numéro de publication internationale: WO 2021/123573

(56) Documents cités:
- WO-A1-2015/091921
- WO-A1-2019/077272

## Description

La présente invention est relative aux compositions de caoutchouc destinées notamment à la fabrication d'articles en caoutchouc tels que les pneumatiques ou les produits semi-finis pour pneumatiques. En particulier, l'invention s'intéresse à des compositions de caoutchouc pour bandes de roulement de pneumatique présentant une bonne endurance et une bonne résistance à l'usure.

Les pneumatiques sont soumis à de nombreuses sollicitations lors de leur usage. Les bandes de roulement de pneumatique notamment, doivent obéir à un grand nombre d'exigences techniques, souvent antinomiques, parmi lesquelles une faible résistance au roulement, une résistance élevée à l'usure, une bonne adhérence, sur route sèche comme sur route mouillée. Il est connu d'utiliser dans les compositions de pneumatique des élastomères, combinés à des charges renforçantes, et à des agents plastifiants. Classiquement, ces agents plastifiants peuvent être des huiles plastifiantes ou des résines plastifiantes, telles que décrites dans de nombreux documents, par exemple dans les demandes de brevet FR 2866028, FR 2877348 ou FR 2889538, décrivant notamment l'utilisation de résines thermoplastiques comme résines plastifiantes.

Egalement, les documents WO2015/091918, WO2015/091921 et WO2019/077272 décrivent des compositions pour pneumatique comprenant une résine de polyphénylène éther, notée résine PPE, qui permet d'améliorer le compromis de performance entre la facilité de fabrication des mélanges et l'adhérence des pneumatiques. De plus, l'utilisation de ces résines thermoplastiques à base de motifs polyphénylène éther éventuellement substitués permet de diminuer la quantité de résine par rapport aux résines thermoplastiques plastifiantes classiques, ce qui permet d'avoir une diminution du collant à cru des compositions lié à l'utilisation de ces résines et donc de faciliter la fabrication des pneumatiques comprenant ces compositions.

A présent, la demanderesse a trouvé qu'on pouvait tirer tout le profit des compositions comprenant un élastomère diénique vinylaromatique et une résine PPE, tout en atteignant d'excellentes performances en résistance à l'usure, ceci grâce à une combinaison spécifique de charge renforçante et d'élastomère spécifique dans ces compositions.

En conséquence, un premier objet de l'invention concerne une composition de caoutchouc à base d'au moins un élastomère diénique vinylaromatique majoritaire, présentant un taux de vinylaromatique inférieur à 10% ; de 3 à 50 pce d'une résine thermoplastique, notée résine PPE, comprenant des motifs polyphénylène éther éventuellement substitués, ladite résine présentant une masse moléculaire moyenne en nombre (Mn) inférieure à 6000 g/mol ; de 5 à 60 pce de silice comme charge renforçante majoritaire ; et un système de réticulation. L'invention a également pour objet les articles en caoutchouc, finis ou semi-finis, comportant une composition de caoutchouc conforme à l'invention.

L'invention a également pour objet les pneumatiques comportant une composition de caoutchouc conforme à l'invention, et notamment les pneumatiques dans lesquels la bande de roulement comporte une composition de caoutchouc selon l'invention.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### Compositions de caoutchouc de l'invention

La composition de caoutchouc selon l'invention est à base d'au moins un élastomère diénique vinylaromatique majoritaire, présentant un taux de vinylaromatique inférieur à 10% ; de 3 à 50 pce d'une résine thermoplastique, notée résine PPE, comprenant des motifs polyphénylène éther éventuellement substitués, ladite résine présentant une masse moléculaire moyenne en nombre (Mn) inférieure à 6000 g/mol ; de 5 à 60 pce de silice comme charge renforçante majoritaire ; et un système de réticulation.

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Dans la présente description, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. De préférence par majoritaire, on entend présent à plus de 50%, de préférence plus de 60%, 70%, 80%, 90%, et plus préférentiellement le composé « majoritaire » représente 100%.

De même, lorsqu'on fait référence à une unité monomère "majoritaire" au sein d'un même polymère, on entend au sens de la présente invention, que cette unité monomère est majoritaire parmi les unités monomères formant le polymère, c'est-à-dire que c'est celle qui représente la plus grande fraction, en masse parmi les unités monomères formant le polymère. Ainsi, par exemple, une résine majoritairement composée d'unités issues de monomères en dicyclopentadiène et aromatique est une résine dans laquelle les unités dicyclopendadiène ajoutées aux unités aromatiques représentent la plus grande quantité en masse, parmi toutes les unités composant ladite résine. Dit autrement, un monomère "majoritaire" ou un ensemble de monomères "majoritaires", est un monomère (ou un ensemble de monomères) qui représente la fraction massique la plus grande dans le polymère. Au contraire, un monomère "minoritaire" est un monomère qui ne représente pas la fraction molaire la plus grande dans le polymère.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### I.1. Elastomères

La composition de caoutchouc selon l'invention comprend un élastomère diénique vinylaromatique majoritaire, présentant un taux de vinylaromatique inférieur à 10%.

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces définitions étant données, on entend plus particulièrement par élastomère diénique vinylaromatique tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène.

A titre de composés vinylaromatiques conviennent par exemple le styrène, l'alphaméthylstyrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères diéniques vinylaromatiques (tels que SBR) du type époxydés.

De préférence, l'élastomère diénique vinylaromatique de la composition conforme à l'invention est choisi dans le groupe constitué par les copolymères de butadiène et de styrène, les copolymères d'isoprène et de styrène, les copolymères de butadiène, d'isoprène et de styrène et les mélanges de ces élastomères, et de préférence dans le groupe constitué par les copolymères de butadiène et de styrène et les mélanges de ces derniers.

Préférentiellement, l'élastomère diénique vinylaromatique présente présentant un taux d'unité vinylaromatique compris entre 0 et 5% en poids et une Tg comprise dans un domaine allant de -110°C à -70°C. Ainsi, ces copolymères de diène et de monomère vinylaromatique peuvent contenir de 95 à moins de 100% en poids d'unités diéniques et de plus de 0 à 5% en poids d'unités vinylaromatiques.

L'élastomère diénique vinylaromatique peut être couplé et/ou étoilé ou fonctionnalisé par un groupement introduit via un agent de couplage et/ou d'étoilage ou de fonctionnalisation connu de l'homme de l'art. Ce groupement peut se situer en bout de chaîne élastomère principale linéaire. On dira alors que l'élastomère diénique est fonctionnalisé en bout ou en extrémité de chaîne. C'est généralement un élastomère obtenu par réaction d'un élastomère vivant sur un agent de fonctionnalisation, c'est à dire toute molécule au moins monofonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction de deux chaînes de l'élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central, auquel n chaînes élastomères (n>2) sont liées formant une structure en étoile. On dira alors que l'élastomère diénique est étoilé. C'est généralement un élastomère obtenu par réaction de n chaînes de l'élastomère vivant sur un agent d'étoilage, c'est à dire toute molécule multifonctionnelle, la fonction étant tout type de groupement chimique connu par l'homme de l'art pour réagir avec un bout de chaîne vivant.

L'homme du métier comprendra qu'une réaction de fonctionnalisation avec un agent comprenant plus d'une fonction réactive vis-à-vis de l'élastomère vivant, résulte en un mélange d'espèces fonctionnalisées en bout de chaîne et en milieu de chaîne, constituant les chaînes linéaires de l'élastomère fonctionnalisé, ainsi que le cas échéant d'espèces étoilées. Selon les conditions opératoires, principalement le rapport molaire de l'agent de fonctionnalisation aux chaînes vivantes, certaines espèces sont majoritaires dans le mélange. Préférentiellement pour les besoins de l'invention, l'élastomère diénique vinylaromatique présente une Tg comprise dans un domaine allant de -110°C à -80°C, de préférence de -95°C à -80°C.

De préférence également, l'élastomère diénique vinylaromatique présente une viscosité Mooney comprise dans un domaine allant de 50 à 80. Dans la présente description, on entend par viscosité Mooney, la viscosité Mooney ML(1+4)100 °C d'un composé, notamment de l'élastomère diénique vinylaromatique utile à l'invention, mesurée selon la norme ASTM D1646.

Selon un mode de réalisation préféré, l'élastomère diénique vinylaromatique présente un taux d'unité vinylaromatique de 1 à 4% en poids par rapport au poids total du copolymère, ainsi qu'un taux d'unité vinylique par rapport à la portion diénique allant de 8 à 15% en poids, de préférence allant de 10 à 15% en poids.

De préférence, au moins 70 % en poids de l'élastomère diénique vinylaromatique est fonctionnalisé, préférentiellement par un groupe alcoxysilane, éventuellement partiellement ou totalement hydrolysé en silanol, le groupe alcoxysilane étant porteur on non d'une autre fonction susceptible d'interagir avec une charge renforçante, le groupe alcoxysilane étant lié à l'élastomère diénique par l'intermédiaire de l'atome de silicium. Préférentiellement, l'élastomère diénique vinylaromatique est fonctionnalisé majoritairement en milieu de chaîne. La microstructure de ces élastomères peut être déterminée par la présence ou non d'un agent polaire et les quantités d'agent polaire employées lors de l'étape de polymérisation anionique. Préférentiellement, lorsque l'élastomère diénique est à base d'un diène et de styrène, un agent polaire est utilisé lors de l'étape de polymérisation dans des quantités telles qu'il favorise la répartition statistique du styrène le long des chaînes polymères tout en conservant le taux de liaisons -1,2 de préférence entre 8% et 15%, de préférence de 10 à 15%. On entend par "groupe alcoxysilane interagissant de manière privilégiée avec la charge renforçante" ou "fonction susceptible d'interagir avec une charge renforçante", tout groupe alcoxysilane ou fonction autre, préférentiellement amine, capable de former, au sein d'une composition de caoutchouc renforcée au moyen d'une charge, une liaison physique ou chimique avec ladite charge. Cette interaction peut s'établir par exemple par le biais de liaisons covalentes, hydrogène, ioniques et/ou électrostatiques entre ladite fonction et des fonctions présentes sur des charges.

Le radical alcoxy du groupe alcoxysilane peut être de formule R'O-, où R' représente un groupe alkyle, substitué ou non substitué, en C1-C10, voire en C1-C8, de préférence un groupe alkyle en C1-C4, plus préférentiellement méthyle et éthyle.

L'autre fonction telle que mentionnée ci-dessus peut être par exemple une amine, un thiol, un groupement polyéther ou polyoxyéthylène. A titre très préférentiel, l'autre fonction susceptible d'interagir avec une charge renforçante est une amine primaire, secondaire ou tertiaire. Cette variante de l'invention est particulièrement avantageuse du fait de l'amélioration des propriétés hystérétiques.

Dans la présente description, on entend par amine primaire ou secondaire une amine primaire ou secondaire protégée ou non par un groupement protecteur connu de l'homme du métier.

A titre de fonction amine secondaire ou tertiaire, on peut citer les amines substituées par des radicaux alkyle en C1-C10, de préférence alkyle en C1-C4, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

De préférence, la fonction susceptible d'interagir avec une charge renforçante est une fonction amine tertiaire, de préférence diéthylamine ou diméthylamine.

Selon une variante de l'invention, la fonction, préférentiellement amine primaire, secondaire ou tertiaire, susceptible d'interagir avec une charge renforçante est directement liée à l'atome de silicium lui-même directement lié à l'élastomère diénique.

Selon une autre variante de l'invention, la fonction, préférentiellement amine primaire, secondaire ou tertiaire, susceptible d'interagir avec une charge renforçante et l'atome de silicium lié à l'élastomère diénique sont reliés entre eux par un groupement espaceur qui peut être un atome ou un groupe d'atomes. Le groupement espaceur peut être un radical hydrocarboné divalent, linéaire ou ramifié, aliphatique en C1-C 18, saturé ou non, cyclique ou non, ou un radical hydrocarboné divalent aromatique en C6-C18 et peut contenir un ou plusieurs radicaux aromatiques et/ou un ou plusieurs hétéroatomes. Le radical hydrocarboné peut éventuellement être substitué.

De préférence, l'élastomère diénique vinylaromatique comprend plus de 0 et jusqu'à 30% en poids (plus préférentiellement entre 0 et 20 %), par rapport au poids total de l'élastomère diénique vinylaromatique, d'un élastomère diénique vinylaromatique étoilé.

Les compositions de l'invention peuvent contenir un seul élastomère diénique vinylaromatique ou un mélange de plusieurs élastomères diéniques vinylaromatiques, le ou les élastomères diéniques vinylaromatiques, toujours majoritaires, pouvant être utilisés en association avec tout autre élastomère connu de l'homme de l'art tel que par exemple, un caoutchouc naturel (NR) ou un polybutadiène (BR).

Le taux d'élastomère diénique vinylaromatique est compris dans un domaine allant de 70 à 100 pce, plus préférentiellement de 85 à 100 pce et très préférentiellement ce taux est de 100 pce, c'est-à-dire qu'il n'y a que des élastomères diéniques vinylaromatiques dans la composition.

### I.2. Résine PPE

La composition selon l'invention comprend de 3 à 50 pce d'une résine thermoplastique à base de motifs polyphénylène éther éventuellement substitués (en abrégé « résine PPE »). Ce type de composé est décrit par exemple dans l'encyclopédie « Ullmann's encyclopédia of industrial chemistry » éditée par VCH, vol A 21, pages 605-614, 5e édition, 1992.

De manière connue, les résines PPE ont habituellement des masses moléculaires moyennes en nombre (Mn) variables, le plus souvent de 15000 à 30000 g/mol, dans le cas des hautes masses comme celles-ci, la Mn est mesurée de manière connue de l'homme de l'art par SEC (encore nommée GPC, comme dans la référence US4588806, colonne 8).

Pour les besoins de l'invention, on utilise pour la composition de l'invention une résine PPE possédant une masse Mn inférieure aux masses régulièrement rencontrées et notamment inférieure à 6000 g/mol, de préférence inférieure à 3500 g/mol, plus préférentiellement comprise dans un domaine variant de 700 à 2500 g/mol. La masse moléculaire moyenne en nombre (Mn) des PPE de masse inférieure à 6000 g/mol est mesurée par RMN, la mesure classique par SEC n'étant pas suffisamment précise. Cette mesure par RMN est effectuée de manière connue de l'homme de l'art, soit par dosage des fonctions bout de chaîne, soit par dosage des initiateurs de polymérisation, comme explicité par exemple dans « Application of NMR spectroscopy in molecular weight détermination of polymers » de Subhash C. Shit et Sukumar Maiti dans « European Polymer Journal » vol.22, n°12, pages 1001 à 1008 (1986). Préférentiellement, la valeur de l'indice de polydispersité Ip (rappel : Ip = Mw/Mn avec Mw masse moléculaire moyenne en poids et Mn masse moléculaire moyenne en nombre) de la résine PPE est inférieure ou égale à 5, plus préférentiellement inférieure ou égale à 3 et plus préférentiellement encore inférieure ou égale à 2.

La résine PPE utile aux besoins de l'invention présente préférentiellement une température de transition vitreuse (Tg), mesurée par DSC selon la norme ASTM D3418 de 1999 comprise dans un domaine allant de 0 à 170°C, de préférence de 120 à 170°C. En dessous de 0°C et au-dessus de 170°C, l'effet technique de l'invention n'est pas optimal.

De préférence, la résine PPE est un composé comprenant majoritairement des motifs polyphénylène de formule générale (I) : 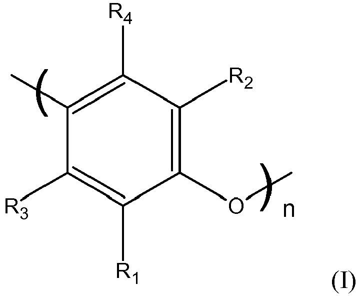 dans laquelle :
- R1, R2, R3 et R4 représentent indépendamment les uns des autres des groupements identiques ou différents choisis parmi l'hydrogène ; les groupements hydroxy, alkoxy, halogène, amino, alkylamino, dialkylamino ; les groupements hydrocarbonés comportant au moins 1 atome de carbone, éventuellement interrompus par des hétéroatomes et éventuellement substitués ; R1 et R3 d'une part et R2 et R4 d'autre part peuvent former ensemble avec les atomes de carbones auxquels ils se rattachent un ou plusieurs cycles accolés au cycle benzénique du composé de formule (I)
- n est un entier compris dans un domaine allant de 3 à 300.

Préférentiellement, R1, R2, R3 et R4 représentent indépendamment les uns des autres des groupements identiques ou différents choisis parmi :
- l'hydrogène
- les groupements hydroxy, alkoxy, halogène, amino, alkylamino, dialkylamino,
- les groupements alkyles linéaire, ramifiés ou cycliques, comprenant de 1 à 25 atomes de carbone (de préférence de 2 à 18), éventuellement interrompus par des hétéroatomes choisis parmi l'azote, l'oxygène et le soufre, et éventuellement substitués par des groupements hydroxy, alkoxy, amino, alkylamino, dialkylamino, ou halogène.
- les groupements aryles comprenant de 6 à 18 atomes de carbones (de préférence de 6 à 12), éventuellement substitués par des groupements hydroxy, alkoxy, amino, alkylamino, dialkylamino, alkyle, ou halogène,

Plus préférentiellement, R1, R2, R3 et R4 représentent indépendamment les uns des autres des groupements identiques ou différents choisis parmi :
- l'hydrogène
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone (de préférence de 2 à 6), éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène.
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

Encore plus préférentiellement, R1 et R2 représentent un groupement alkyle et en particulier un groupe méthyle ; et R3 et R4 représentent des atomes d'hydrogène. Dans ce cas, la résine PPE est un poly(2,6-diméthyl-1,4-phénylène éther).

De manière préférentielle également, n est un entier compris dans un domaine allant de 3 à 50, plus préférentiellement de 5 à 30, de préférence de 6 à 20.

De préférence, la résine PPE est un composé comprenant à plus de 80% en poids, et plus préférentiellement encore à plus de 95% en poids, des motifs polyphénylène de formule générale (I).

A titre d'exemples, on peut citer le poly(2,6-diméthyl-1,4-phénylène éther) et notamment le « Noryl SA 120 » ou le « Noryl SA 90 » de la socité Sabic.

Le taux de résine PPE dans la composition est préférentiellement compris dans un domaine allant de 3 à 40 pce, de préférence de 5 à 30 pce, plus préférentiellement de 5 à 20 pce.

### I.3. Charge renforçante

La composition de caoutchouc de l'invention comprend de 5 à 60 pce de silice comme charge renforçante majoritaire.

De préférence le taux de silice est compris dans un domaine allant de 10 à 50 pce, plus préférentiellement de 15 à 40 pce.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m2/g, de préférence comprises dans un domaine allant de 30 à 400 m2/g, notamment de 60 à 300 m2/g.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites «HDS» pour «highly dispersible silica»). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices «Ultrasil 5000GR» ou «Ultrasil 7000GR» de la société Evonik, les silices «Zeosil 1085GR», «Zeosil 1115MP», «Zeosil 1165MP», «Zeosil Premium 200MP», ou encore «Zeosil HRS 1200 MP» de la Société Solvay. À titre de silice non HDS, les silices commerciales suivantes peuvent être utilisées : «Ultrasil VN2GR» ou «Ultrasil VN3GR» de la société Evonik, «Zeosil 175GR» de la société Solvay, «Hi-Sil EZ120G(-D)», «Hi-Sil EZ160G(-D)», «Hi-Sil EZ200G(-D)», «Hi-Sil 243LD», «Hi-Sil 210», «Hi-Sil HDP 320G» de la société PPG.

L'état physique sous lequel se présente la silice est indifférent, que ce soit sous forme de poudre, de microperles, de granulés, ou encore de billes ou toute autre forme densifiée appropriée.

L'homme du métier saura adapter les taux de charges renforçantes selon l'utilisation concernée, notamment selon le type de pneumatiques concerné, par exemple pneumatique pour moto, pour véhicule de tourisme ou encore pour véhicule utilitaire tel que camionnette ou poids lourd.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la silice et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles de la silice et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination «Si69» par la société Evonik ou le disulfure de bis-(triéthoxysilylpropyle), en abrégé TESPD commercialisé sous la dénomination «Si75» par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination «NXT Silane». Plus préférentiellement, l'organosilane est un organosilane polysulfuré.

Dans les compositions de caoutchouc conformes à l'invention, la teneur en agent de couplage est préférentiellement comprise entre 0,5 et 6 pce, plus préférentiellement entre 1 et 5 pce.

A titre minoritaire, la composition peut comprendre du noir de carbone, par exemple de préférence à un taux allant de 0 à 15 pce, de préférence de 0 à 5 pce, et plus préférentiellement de 0,5 à 3 pce.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

### I.4. Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, de préférence de 1 à 10 pce, plus préférentiellement de 1 à 5 pce. L'accélérateur de vulcanisation est utilisé à un taux préférentiel compris entre 0,5 et 10 pce, plus préférentiellement compris entre 0,5 et 5,0 pce. On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### I.5. Additifs divers

Les compositions de caoutchouc conformes à l'invention peuvent comporter également tout ou partie des additifs et agents de mise en oeuvre usuels, connus de l'homme de l'art et habituellement utilisés dans les compositions de caoutchouc pour pneumatiques, en particulier de bandes de roulement, comme par exemple des plastifiants (tels que des huiles plastifiantes et/ou des résines plastifiantes), des charges (autres que celles précitées), des pigments, des agents de protection tels que cires anti-ozone, anti-ozonants chimiques, antioxydants, des agents anti-fatigue, des résines renforçantes (telles que décrites par exemple dans la demande WO 02/10269).

### II. Préparation des compositions de caoutchouc

Les compositions de caoutchouc de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 200°C, de préférence entre 130°C et 185°C pendant une durée généralement comprise entre 2 et 10 minutes ; suivie d'une seconde phase de travail mécanique (phase dite "productive") jusqu'à une plus basse température, typiquement inférieure à 120°C, par exemple entre 40°C et 100°C, phase de finition au cours de laquelle est incorporé le système de réticulation, et le tout est alors mélangé pendant quelques minutes, par exemple entre 5 et 15 minutes.

Le procédé pour préparer de telles compositions consiste donc par exemple à incorporer aux élastomères, notamment à l'élastomère diénique vinylaromatique, au cours de la première étape (dite "non-productive"), la charge renforçante, la résine PPE et les éventuels autres ingrédients de la composition à l'exception du système de réticulation, en malaxant thermomécaniquement le tout (par exemple en une ou plusieurs fois), jusqu'à atteindre une température maximale comprise entre 110°C et 190°C ; puis à refroidir l'ensemble à une température inférieure à 100°C ; pour ensuite incorporer au cours de la seconde étape (dite "productive"), le système de réticulation et malaxer le tout jusqu'à une température maximale inférieure à 110°C.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

L'invention concerne les compositions de caoutchouc, les articles de caoutchouc, les pneumatiques et les produits semi-finis pour pneumatiques précédemment décrits, tant à l'état cru (c'est à dire, avant cuisson) qu'à l'état cuit (c'est à dire, après réticulation ou vulcanisation).

### III. Pneumatique de l'invention

La composition de caoutchouc selon l'invention peut être utilisée dans différentes parties du pneumatique, notamment dans le sommet, la carcasse, la zone du bourrelet, la zone du flanc et la bande de roulement (incluant notamment la sous-couche de la bande de roulement).

Selon un mode préférentiel de réalisation de l'invention, la composition de caoutchouc précédemment décrite peut être utilisée dans le pneumatique comme une couche élastomère rigide dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### EXEMPLES DE REALISATION DE L'INVENTION

### A. Préparation des compositions

Les compositions présentées plus bas ont été préparées selon le mode opératoire décrit plus haut, en deux étapes, non productive puis productive.

Les compositions profilées ont été réticulées à l'optimum à une température de 160°C.

### B. Tests

Les compositions de caoutchouc peuvent être caractérisées, par leurs propriétés à la rupture, mesurées comme indiqué ci-dessous, représentatives des propriétés observées en pneumatique en particulier pour la résistance à l'usure et l'endurance.

Les essais de traction permettent de déterminer les modules d'élasticité et les propriétés à la rupture et sont basées sur la norme NF ISO 37 de décembre 2005.

On mesure à 23°C en seconde élongation (i.e., après un cycle d'accommodation au taux d'extension prévu pour la mesure elle-même) le module sécant nominal (ou contrainte apparente, en MPa, rapportée à la déformation, sans unité) à 10% d'allongement (notés MA 10).

On mesure à 23°C la contrainte, en MPa, et la déformation à la rupture, en %.

Pour plus de lisibilité dans la présentation des résultats ci-dessous et une comparaison facilitée, les résultats sont donnés en base 100, la valeur 100 étant fixée pour le témoin. Un résultat supérieur à 100 en contrainte à la rupture ou en déformation à la rupture indique une valeur augmentée et donc une performance améliorée en contrainte à la rupture ou en déformation à la rupture, pour la composition comparée au témoin.

### C. Essais de compositions de caoutchouc

Les compositions témoins T1 à T3 sont des compositions comprenant un SBR à taux de styrène supérieur à 10% et/ou ne comprenant pas de résine PPE. Ce type de compositions est connu de l'homme du métier dans le domaine des pneumatiques. La composition C1 est conforme à l'invention. Les formulations (en pce ou parties en poids pour cent parties en poids d'élastomère) ont été représentées dans le tableau 1 ci-dessous.

**Tableau 1**

| Composition | T1 | T2 | | T3 | C1 |
|---|---|---|---|---|---|
| SBR A (1) | 100 | 100 | | - | - |
| SBR B (2) | - | - | | 100 | 100 |
| Silice (3) | 26,3 | 28 | | 26,3 | 28 |
| Silane (4) | 2 | 2,3 | | 2 | 2,3 |
| PPE (5) | - | 6,8 | | - | 6,8 |
| Oxyde zinc (6) | 3 | 3 | | 3 | 3 |
| Acide stéarique (7) | 2,5 | 2,5 | | 2,5 | 2,5 |
| Accélérateur (8) | 2,5 | 2,5 | | 2,5 | 2,5 |
| Soufre | 1 | 1 | | 1 | 1 |

| | | | | | |
|---|---|---|---|---|---|
| SBR A avec 15% de motif styrène et 24% de motif 1,2 pour la partie butadiénique (Tg mesurée par DSC selon la norme ASTM D3418 de 1999 de -65°C) ; SBR B avec 3% de motif styrène et 12% de motif 1,2 pour la partie butadiénique (Tg mesurée par DSC selon la norme ASTM D3418 de 1999 de -88°C) Silice « Z1165MP » de la société Solvay ; Agent de couplage silane « TESPT SI69 » de la société Evonik ; Résine PPE: Poly(2,6-diméthyl-1,4-phénylène éther) « Noryl SA90 » de la société Sabic, Mn = 2350 g/mol; Oxyde de zinc (grade industriel - société Umicore) ; Stéarine (« Pristerene 4931 » de la société Uniqema) ; N-cyclohexyl-benzothiazyl sulphénamide (« Santocure CBS » de la société Flexsys). | | | | | |

Les propriétés des compositions sont représentées dans le tableau 2 ci-dessous.

**Tableau 2**

| Composition | T1 | T2 | | T3 | C1 |
|---|---|---|---|---|---|
| contrainte rupture 23°C base 100 | 100 | 96 | | 100 | 150 |
| déformation rupture 23°C base 100 | 100 | 74 | | 100 | 131 |

On note que la composition C1 permet d'améliorer à la fois la contrainte à la rupture et la déformation à la rupture par rapport au témoin T3, grâce à la synergie d'un SBR présentant un taux de styrène inférieur à 10% et d'une résine PPE. Cet effet n'est pas produit par la résine PPE en présence d'un SBR présentant un taux de styrène supérieur à 10% comme le montre la comparaison de T1 et T2. L'invention permet donc d'obtenir une résistance à la déchirabilité améliorée, une meilleure résistance à l'usure et une bonne endurance.

## Revendications

1. Composition de caoutchouc à base d'au moins :
- un élastomère diénique vinylaromatique majoritaire, présentant un taux de vinylaromatique inférieur à 10%,
- 3 à 50 pce d'une résine thermoplastique, notée résine PPE, comprenant des motifs polyphénylène éther éventuellement substitués, ladite résine présentant une masse moléculaire moyenne en nombre (Mn) inférieure à 6000 g/mol,
- 5 à 60 pce de silice comme charge renforçante majoritaire,
- un système de réticulation.

2. Composition selon la revendication 1, dans laquelle l'élastomère diénique vinylaromatique est choisi dans le groupe constitué par les copolymères de butadiène et de styrène, les copolymères d'isoprène et de styrène, les copolymères de butadiène, d'isoprène et de styrène et les mélanges de ces élastomères, et de préférence dans le groupe constitué par les copolymères de butadiène et de styrène et les mélanges de ces derniers.

3. Composition selon l'une quelconque des revendications précédentes dans laquelle l'élastomère diénique vinylaromatique présente présentant un taux de vinylaromatique compris entre 0 et 5% en poids et une Tg comprise dans un domaine allant de -110°C à - 70°C.

4. Composition selon l'une quelconque des revendications précédentes, dans laquelle le taux d'élastomère diénique vinylaromatique est compris dans un domaine allant de 70 à 100 pce (parties en poids pour cent parties d'élastomère), de préférence de 85 à 100 pce.

5. Composition selon l'une quelconque des revendications précédentes, dans laquelle le taux d'élastomère diénique vinylaromatique est de 100 pce.

6. Composition selon l'une quelconque des revendications précédentes, dans laquelle la résine PPE présente une masse moléculaire moyenne en nombre (Mn) inférieure à 3500 g/mol, de préférence comprise dans un domaine allant de 700 à 2500 g/mol.

7. Composition selon l'une quelconque des revendications précédentes, dans laquelle la résine PPE présente une température de transition vitreuse (Tg), mesurée par DSC selon la norme ASTM D3418 de 1999, comprise dans un domaine allant de 0 à 170°C, de préférence de 120 à 170°C.

8. Composition selon l'une quelconque des revendications précédentes, dans laquelle la résine PPE est un composé comprenant majoritairement des motifs polyphénylène de formule générale (I) : 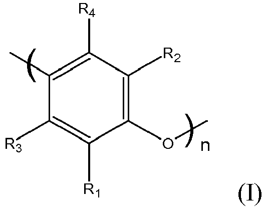 dans laquelle :
- R1, R2, R3 et R4 représentent indépendamment les uns des autres des groupements identiques ou différents choisis parmi les groupements hydrogène, hydroxy, alkoxy, halogène, amino, alkylamino, dialkylamino ou les groupements hydrocarbonés comportant au moins 1 atome de carbone, éventuellement interrompus par des hétéroatomes et éventuellement substitués ; R1 et R3 d'une part et R2 et R4 d'autre part pouvant former ensemble avec les atomes de carbones auxquels ils se rattachent un ou plusieurs cycles accolés au cycle benzénique du composé de formule (I)
- n est un entier compris dans un domaine allant de 3 à 300.

9. Composition selon la revendication 8, dans laquelle la résine PPE est un composé comprenant majoritairement des motifs polyphénylène de formule générale (I) dans laquelle R1, R2, R3 et R4 représentent indépendamment les uns des autres des groupements identiques ou différents choisis parmi :
- l'hydrogène,
- les groupements hydroxy, alkoxy comportant de 1 à 6 atomes de carbone, halogène, amino, alkylamino comportant de 1 à 6 atomes de carbone, dialkylamino comportant de 2 à 12 atomes de carbone,
- les groupements alkyles linéaire, ramifiés ou cycliques, comprenant de 1 à 12 atomes de carbone, de préférence de 2 à 6, éventuellement interrompus par des hétéroatomes et éventuellement substitués par des groupements hydroxy, alkoxy comportant de 1 à 6 atomes de carbone, amino, alkylamino comportant de 1 à 6 atomes de carbone, dialkylamino comportant de 2 à 12 atomes de carbone, ou halogène.
- les groupements aryles comprenant de 6 à 18 atomes de carbones (de préférence de 6 à 12), éventuellement substitués par des groupements hydroxy, alkoxy comportant de 1 à 6 atomes, amino, alkylamino comportant de 1 à 6 atomes, dialkylamino comportant de 2 à 12 atomes de carbone, alkyle comportant de 1 à 12 atomes de carbone, ou halogène.

10. Composition selon l'une quelconque des revendications 8 ou 9, dans laquelle R1 et R2 représentent un groupement alkyle et de préférence un groupe méthyle ; et R3 et R4 représentent des atomes d'hydrogène.

11. Composition selon l'une quelconque des revendications précédentes, dans laquelle le taux de résine PPE est compris dans un domaine allant de 3 à 40 pce, de préférence de 5 à 30 pce, plus préférentiellement de 5 à 20 pce.

12. Composition selon l'une quelconque des revendications précédentes, dans laquelle le taux de silice est compris dans un domaine allant de 10 à 50 pce et de préférence de 15 à 40 pce.

13. Article de caoutchouc fini ou semi-fini comportant une composition selon l'une quelconque des revendications 1 à 12.

14. Pneumatique comportant une composition selon l'une quelconque des revendications 1 à 12.

## Patentansprüche

1. Kautschukzusammensetzung, die zumindest auf Folgendem basiert:
- einem vinylaromatischen Dien-Elastomer, das den überwiegenden Teil ausmacht und einen Gehalt an vinylaromatischen Bestandteilen von weniger als 10 % aufweist,
- 3 bis 50 phr eines thermoplastischen Harzes, welches als PPE-Harz bezeichnet wird, wobei es einen möglicherweise substituierten Polyphenylenether-Baustein umfasst, wobei das Harz ein Zahlenmittel des Molekulargewichts (Mn) von weniger als 6.000 g/mol aufweist,
- 5 bis 60 phr an Siliciumdioxid als verstärkendem Füllstoff, der den überwiegenden Teil ausmacht,
- ein Vernetzungssystem.

2. Zusammensetzung nach Anspruch 1, wobei das vinylaromatische Dien-Elastomer aus der Gruppe, die aus Copolymeren von Butadien und Styrol, Copolymeren von Isopren und Styrol, Copolymeren von Butadien, Isopren und Styrol sowie Mischungen dieser Elastomere besteht, und vorzugsweise aus der Gruppe ausgewählt ist, die aus Copolymeren von Butadien und Styrol sowie Mischungen der letzteren besteht.

3. Zusammensetzung nach einem beliebigen der vorhergehenden Ansprüche, wobei das vinylaromatische Dien-Elastomer einen Gehalt an vinylaromatischen Bestandteilen zwischen 0 und 5 Gewichts-% und eine Tg im Bereich von -110 °C bis -70 °C aufweist.

4. Zusammensetzung nach einem beliebigen der vorhergehenden Ansprüchen, wobei der Gehalt an vinylaromatischem Dsien-Elastomer im Bereich von 70 bis 100 phr (Gewichtsteile auf hundert Teil an Elastomer), vorzugsweise von 85 bis 100 phr liegt.

5. Zusammensetzung nach einem beliebigen der vorhergehenden Ansprüche, wobei der Gehalt an vinylaromatischem Dien-Elastomer 100 phr beträgt.

6. Zusammensetzung nach einem beliebigen der vorhergehenden Ansprüche, wobei das PPE-Harz ein Zahlenmittel des Molekulargewichts (Mn) von weniger als 3.500 g/mol aufweist, wobei dieses vorzugsweise im Bereich von 700 bis 2.500 g/mol liegt.

7. Zusammensetzung nach einem beliebigen der vorhergehenden Ansprüche, wobei das PPE-Harz eine Glasübergangstemperatur (Tg) aufweist, die bei einer Messung mittels DSC gemäß der Norm ASTM D3418 von 1999 im Bereich von 0 bis 170 °C, vorzugsweise von 120 bis 170 °C, liegt.

8. Zusammensetzung nach einem beliebigen der vorhergehenden Ansprüche, wobei es sich bei dem PPE-Harz um eine Verbindung handelt, die überwiegend Polyphenylen-Bausteine der allgemeinen Formel (I) umfasst: 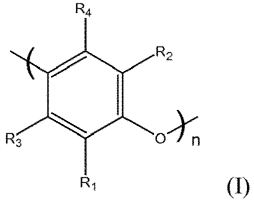 in welcher:
- R1, R2, R3 und R4 unabhängig voneinander für vollkommen gleichartige oder verschiedenartige Gruppen stehen, die aus den Gruppen Wasserstoff, Hydroxyl, Alkoxy, Halogen, Amino, Alkylamino, Dialkylamino oder den Kohlenwasserstoffgruppen ausgewählt sind, welche mindestens ein Kohlenstoffatom aufweisen, wobei sie möglicherweise von Heteroatomen unterbrochen und möglicherweise substituiert sind; einerseits R1 und R3 sowie andererseits R2 und R4 gemeinsam mit den Kohlenstoffatomen, an welche sie gebunden sind, einen oder mehrere Ringe bilden können, die an den Benzolring der Verbindung nach Formel (I) angelagert sind,
- n eine ganze Zahl im Bereich von 3 bis 300 ist.

9. Zusammensetzung nach Anspruch 8, wobei es sich bei dem PPE-Harz um eine Verbindung handelt, die überwiegend Polyphenylen-Bausteine der allgemeinen Formel (I) umfasst, wobei R1, R2, R3 und R4 unabhängig voneinander für vollkommen gleichartige oder verschiedenartige Gruppen stehen, die aus Folgendem ausgewählt sind:
- Wasserstoff,
- den Gruppen Hydroxyl, Alkoxy, welches 1 bis 6 Kohlenstoffatomen aufweist, Halogen, Amino, Alkylamino, welches 1 bis 6 Kohlenstoffatome aufweist, Dialkylamino, welches 2 bis 12 Kohlenstoffatome aufweist,
- den geradkettigen, verzweigten oder zyklischen Alkylgruppen, die 1 bis 12 Kohlenstoffatome, vorzugsweise 2 bis 6 Kohlenstoffatome umfassen, wobei sie möglicherweise von Heteroatomen unterbrochen sind und möglicherweise mit den Gruppen Hydroxyl, Alkoxy, welches 1 bis 6 Kohlenstoff aufweist, Amino, Alkylamino, welches 1 bis 6 Kohlenstoffatome aufweist, Dialkylamino, welches 2 bis 12 Kohlenstoffatome aufweist, oder Halogen substituiert sind,
- den Arylgruppen, die 6 bis 18 Kohlenstoffatome (vorzugsweise 6 bis 12) aufweisen, wobei sie möglicherweise mit den Gruppen Hydroxyl, Alkoxy, welches 1 bis 6 Kohlenstoff aufweist, Amino, Alkylamino, welches 1 bis 6 Kohlenstoffatome aufweist, Dialkylamino, welches 2 bis 12 Kohlenstoffatome aufweist, Alkyl, welches 1 bis 12 Kohlenstoffatome aufweist, oder Halogen substituiert sind.

10. Zusammensetzung nach einem beliebigen der Ansprüche 8 oder 9, wobei R1 und R2 für eine Alkylgruppe und vorzugsweise eine Methylgruppe stehen; und R3 und R4 für Wasserstoffatome stehen.

11. Zusammensetzung nach einem beliebigen der vorhergehenden Ansprüche, wobei der Gehalt an PPE-Harz im Bereich von 3 bis 40 phr, vorzugsweise von 5 bis 30 phr, stärker bevorzugt von 5 bis 20 phr liegt.

12. Zusammensetzung nach einem beliebigen der vorhergehenden Ansprüche, wobei der Gehalt an Siliciumdioxid im Bereich von 10 bis 50 phr und vorzugsweise von 15 bis 40 phr liegt.

13. Gebrauchsfertiger oder halbfertiger Kautschukgegenstand, der eine Zusammensetzung nach einem beliebigen der Ansprüche 1 bis 12 aufweist.

14. Luftreifen, der eine Zusammensetzung nach einem beliebigen der Ansprüche 1 bis 12 aufweist.

## Claims

1. Rubber composition based on at least:
- a predominant vinylaromatic diene elastomer, having a vinylaromatic content of less than 10%,
- 3 to 50 phr of a thermoplastic resin, denoted PPE resin, comprising optionally substituted polyphenylene ether units, said resin having a number-average molecular weight (Mn) of less than 6000 g/mol,
- 5 to 60 phr of silica as predominant reinforcing filler,
- a crosslinking system.

2. Composition according to Claim 1, in which the vinylaromatic diene elastomer is selected from the group consisting of butadiene/styrene copolymers, isoprene/styrene copolymers and butadiene/isoprene/styrene copolymers and mixtures of these elastomers, and preferably from the group consisting of butadiene/styrene copolymers and mixtures of the latter.

3. Composition according to either one of the preceding claims, in which the vinylaromatic diene elastomer present has a vinylaromatic content of between 0% and 5% by weight and a Tg within a range extending from -110°C to -70°C.

4. Composition according to any one of the preceding claims, in which the content of vinylaromatic diene elastomer is within a range extending from 70 to 100 phr (parts by weight per hundred parts of elastomer), preferably from 85 to 100 phr.

5. Composition according to any one of the preceding claims, in which the content of vinylaromatic diene elastomer is 100 phr.

6. Composition according to any one of the preceding claims, in which the PPE resin has a number-average molecular weight (Mn) of less than 3500 g/mol, preferably within a range extending from 700 to 2500 g/mol.

7. Composition according to any one of the preceding claims, in which the PPE resin has a glass transition temperature (Tg), measured by DSC according to Standard ASTM D3418 of 1999, within a range extending from 0 to 170°C, preferably from 120 to 170°C.

8. Composition according to any one of the preceding claims, in which the PPE resin is a compound comprising predominantly polyphenylene units of general formula (I) : 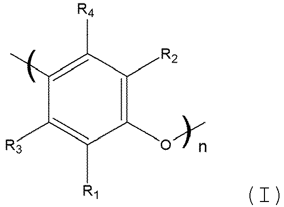 in which:
- R₁, R₂, R₃ and R₄ represent, independently of one another, identical or different groups selected from hydrogen, hydroxy, alkoxy, halogen, amino, alkylamino or dialkylamino groups or hydrocarbon-based groups comprising at least 1 carbon atom, optionally interrupted by heteroatoms and optionally substituted; R₁ and R₃ on the one hand, and R₂ and R₄ on the other, possibly forming, together with the carbon atoms to which they are attached, one or more rings fused to the benzene ring of the compound of formula (I),
- n is an integer within a range extending from 3 to 300.

9. Composition according to Claim 8, in which the PPE resin is a compound comprising predominantly polyphenylene units of general formula (I) in which R₁, R₂, R₃ and R₄ represent, independently of one another, identical or different groups selected from:
- hydrogen,
- hydroxyl groups, alkoxy groups comprising from 1 to 6 carbon atoms, halogen groups, amino groups, alkylamino groups comprising from 1 to 6 carbon atoms or dialkylamino groups comprising from 2 to 12 carbon atoms,
- linear, branched or cyclic alkyl groups, comprising from 1 to 12 carbon atoms, preferably from 2 to 6, which are optionally interrupted by heteroatoms and optionally substituted by hydroxyl groups, alkoxy groups comprising from 1 to 6 carbon atoms, amino groups, alkylamino groups comprising from 1 to 6 carbon atoms, dialkylamino groups comprising from 2 to 12 carbon atoms, or halogen groups,
- aryl groups comprising from 6 to 18 carbon atoms (preferably from 6 to 12) which are optionally substituted by hydroxyl groups, alkoxy groups comprising from 1 to 6 atoms, amino groups, alkylamino groups comprising from 1 to 6 atoms, dialkylamino groups comprising from 2 to 12 carbon atoms, alkyl groups comprising from 1 to 12 carbon atoms, or halogen groups.

10. Composition according to either one of Claims 8 and 9, in which R₁ and R₂ represent an alkyl group and preferably a methyl group; and R₃ and R₄ represent hydrogen atoms.

11. Composition according to any one of the preceding claims, in which the content of PPE resin is within a range extending from 3 to 40 phr, preferably from 5 to 30 phr, more preferentially from 5 to 20 phr.

12. Composition according to any one of the preceding claims, in which the content of silica is within a range extending from 10 to 50 phr and preferably from 15 to 40 phr.

13. Finished or semi-finished rubber item comprising a composition according to any one of Claims 1 to 12.

14. Tyre comprising a composition according to any one of Claims 1 to 12.
